(19) Europäisches Patentamt
European Patent Office
Office européen des brevets

(11) **EP 4 752 950 A1**

(12) **EUROPEAN PATENT APPLICATION**
published in accordance with Art. 153(4) EPC

(43) Date of publication:
**03.06.2026 Bulletin 2026/23**

(21) Application number: **24873034.3**

(22) Date of filing: **27.09.2024**

(51) International Patent Classification (IPC):
$H01M\ 4/131^{(2010.01)}$        $H01M\ 4/62^{(2006.01)}$
$H01M\ 4/525^{(2010.01)}$        $H01M\ 4/505^{(2010.01)}$
$H01M\ 10/052^{(2010.01)}$       $H01M\ 4/02^{(2006.01)}$

(52) Cooperative Patent Classification (CPC):
**H01M 4/02; H01M 4/131; H01M 4/505;**
**H01M 4/525; H01M 4/62; H01M 10/052;**
**Y02E 60/10**

(86) International application number:
**PCT/KR2024/014717**

(87) International publication number:
**WO 2025/071327 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.09.2023 KR 20230131250**

(71) Applicant: **LG Energy Solution, Ltd.**
**Seoul 07335 (KR)**

(72) Inventors:
• **KIM, Young Jae**
**Daejeon 34122 (KR)**

• **PARK, Joo Yong**
**Daejeon 34122 (KR)**
• **KIM, Tae Gon**
**Daejeon 34122 (KR)**
• **LIM, Han Min**
**Daejeon 34122 (KR)**
• **PARK, Sang Hyun**
**Daejeon 34122 (KR)**
• **KIM, Cho Won**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHOD AND LITHIUM SECONDARY BATTERY COMPRISING SAME**

(57)    The present invention relates to a positive electrode having a positive electrode composite layer, including a single particle-type positive electrode active material and a conductive material including a plate-like carbon material, disposed on a current collector, and having a packing index PI of 0.1 to 3.6, where the PI is derived from factors including a volume cumulative average particle size $D_{50}$ of the single particle-type positive electrode active material, a crystallite size $L_c$ in a c-axis direction of the plate-like carbon material, and a specific surface area $S_c$ of the plate-like carbon material, and the positive electrode exhibits high rolling density without damage to the positive electrode active material and may thus provide a lithium secondary battery having excellent energy density.

EP 4 752 950 A1

**Description**

## TECHNICAL FIELD

The present invention relates to a positive electrode for a lithium secondary battery and a lithium secondary battery including the same, and more particularly, to a positive electrode exhibiting a low porosity and a high rolling density and a lithium secondary battery including the same.

## BACKGROUND ART

Lithium secondary batteries are typically provided with a positive electrode, a negative electrode, a separator, and an electrolyte, and the positive electrode and the negative electrode include active materials enabling intercalation/deintercalation of lithium ions.

lithium cobalt oxide ($LiCoO_2$), lithium nickel oxide ($LiNiO_2$), lithium manganese oxide ($LiMnO_2$, $LiMnO_4$, or the like), lithium iron phosphate compound ($LiFePO_4$), and the like have been used as a positive electrode active material for lithium secondary batteries. Among those listed above, the lithium cobalt oxide has high operating voltage and excellent capacity characteristics, but it is difficult to commercially apply the lithium cobalt oxide to large-capacity batteries because cobalt, which is a raw material of the lithium cobalt oxide, is expensive and unstably supplied. The lithium nickel oxide has poor structural stability, and thus is hardly provided with sufficient lifespan. Meanwhile, the lithium manganese oxide has excellent stability but comes with poor capacity. Accordingly, single particle-type lithium nickel-based oxides including at least two types of transition metals have been developed to compensate for the limitations of lithium transition metal oxides including Ni, Co, or Mn alone, and particularly, lithium nickel cobalt manganese oxides including Ni, Co, and Mn have been widely used in the field of batteries for electric vehicles.

Meanwhile, in addition to using a high-capacity positive electrode active material, materials included in the positive electrode are of vital importance for achieving batteries with high energy density. To this end, research efforts are underway to make the most use of active material and to make the least use of conductive material and binder. In a typical example of using CNT as a conductive material, the CNTs are linearly positioned between active materials, allowing for easy achievement of conductivity with a small amount, which maximizes a loading amount of the active material.

However, the CNTs, under at least a certain pressure during electrode rolling, damage the active material, and reducing the rolling density to create space for linear CNTs between the active materials and thus to prevent damage to the active material results in a thicker electrode with higher porosity, which hinders the increase of energy density.

Accordingly, research is required to develop a positive electrode having reduced porosity and increased rolling density without any damage to active materials.

## DISCLOSURE OF THE INVENTION

### TECHNICAL PROBLEM

The present invention is designed to overcome the limitations described above, and thus, an aspect of the present invention provides a positive electrode exhibiting excellent rolling density and low porosity through a combination of a single particle positive electrode active material, particularly lithium nickel-based oxide having a volume cumulative average particle size within a specific range, and a conductive material such as a plate-like carbon material, particularly a plate-like carbon material having a large specific surface area and a small crystalline size in a c-axis direction.

An aspect of the present invention also provides a lithium secondary battery exhibiting improved energy density, including the positive electrode described above.

### TECHNICAL SOLUTION

[1] According to an aspect of the present invention, there is provided a positive electrode having a positive electrode composite layer, including a single particle-type positive electrode active material and a conductive material including a plate-like carbon material, disposed on a current collector, and having a packing index PI of 0.1 to 3.6, indicated by Equation 1 below.

[Equation 1]

$$PI = (D_{50} \times L_c) / (S_c)$$

In Equation 1 above,

$D_{50}$ is a unitless number of an average particle size (μm) at 50% cumulative volume in a particle size distribution graph obtained through a laser diffraction method for the single particle-type positive electrode active material, $L_c$ is a unitless number of a crystallite size (nm) in a c-axis direction, as determined by XRD analysis, and $S_c$ is a BET specific surface area of the plate-like carbon material, given as a unitless number without a specific surface area unit of $m^2/g$.

[2] The present invention provides the positive electrode according to [1] above, wherein the plate-like carbon material may have a BET specific surface area $S_c$ of 100 $m^2/g$ to 400 $m^2/g$.

[3] The present invention provides the positive electrode according to [1] or [2] above, wherein the plate-like carbon material may have a crystallite size $L_c$ of 20 nm to 60 nm in a c-axis direction.

[4] The present invention provides the positive electrode according to at least one of [1] to [3] above, wherein the plate-like carbon material may include at least one selected from natural graphite and artificial graphite.

[5] The present invention provides the positive electrode according to at least one of [1] to [4] above, wherein the conductive material may further include at least one selected from a linear carbon material and a point-type carbon material.

[6] The present invention provides the positive electrode according to at least one of [1] to [5] above, wherein the conductive material may be provided in an amount of 0.4 wt% to 2.5 wt% with respect to a total weight of the positive electrode composite layer.

[7] The present invention provides the positive electrode according to at least one of [1] to [6] above, wherein the single particle-type positive electrode active material may have a volume cumulative average particle size $D_{50}$ of 1.0 μm to 10.0 μm.

[8] The present invention provides the positive electrode according to at least one of [1] to [7] above, wherein the single particle-type positive electrode active material may include 30 or fewer nodules, and the nodules may have an average particle size $D_{mean}$ of 0.2 μm to 3.0 μm.

[9] The present invention provides the positive electrode according to at least one of [1] to [8] above, wherein the single particle-type positive electrode active material may have a $D_{50}/D_{mean}$ ratio ranging from 1 to 10, where $D_{50}$ is a volume cumulative average particle size and $D_{mean}$ is an average particle size of nodules.

[10] The present invention provides the positive electrode according to at least one of [1] to [9] above, wherein the single particle-type positive electrode active material may include at least one selected from the group consisting of a lithium nickel-based oxide and a lithium metal phosphate-based compound, the lithium nickel-based oxide may have a composition represented by Formula 1 below, and the lithium metal phosphate-based compound may have a composition represented by Formula 2 below.

[Formula 1] $Li_{1+x}Ni_aCo_bM^1_cM^2_dO_{2-e}X_e$

In Formula 1 above, $M^1$ includes at least one selected from Mn and Al, $M^2$ includes at least one selected from the group consisting of W, Zr, Y, Ba, Ca, Ti, V, Mg, Ta, and Nb, X includes at least one selected from the group consisting of N, P, S, F, and Cl, and x, a, b, c, d, and e satisfy $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$.

[Formula 2] $Li_{1+x}[Fe_{1-y}M_y]PO_4$

In Formula 2 above, M includes at least one selected from the group consisting of Mn, Co, Ni, Al, Mg, and Ti, and x and y satisfy $-0.5 \leq x \leq 0.5$ and $0 \leq y < 1$.

[11] The present invention provides the positive electrode according to at least one of [1] to [10] above, wherein the positive electrode may have a porosity of 12.0% to 22.0%.

[12] The present invention provides the positive electrode according to at least one of [1] to [11] above, wherein the single particle-type positive electrode active material may be provided in an amount of 93.0 wt% to 99.0 wt% with respect to a total weight of the positive electrode composite layer.

[13] The present invention provides the positive electrode according to at least one of [1] to [12] above, wherein the positive electrode composite layer may further include a binder.

[14] According to another aspect of the present invention, there is provided a lithium secondary battery including the positive electrode according to at least one of [1] to [13] above.

**ADVANTAGEOUS EFFECTS**

In a positive electrode according to the present invention, a combination of a single particle-type lithium nickel-based oxide having a volume cumulative average particle size within an appropriate range, and a plate-like carbon material having a large specific surface area and a small crystalline size in a c-axis direction a conductive material are employed, and thus even under high pressure rolling, the plate-like carbon material may slide along a surface of an active material, relieving the stress exerted on active material particles, resulting in reduced particle breakage, crack formation, fine particles, and porosity.

In addition, a lithium secondary battery according to the present invention includes the positive electrode exhibiting high rolling density and low porosity as described above, and thus has improved energy density, and reduced cracking or breakage of active material particles leading to reduced side reactions with an electrolyte, resulting in less gas generation and improved lifespan characteristics.

**MODE FOR CARRYING OUT THE INVENTION**

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Herein, it will be further understood that the terms "include," "comprise," or "have" specify the presence of stated features, numbers, steps, elements, or combinations thereof, but do not preclude the presence or addition of one or more other features, numbers, steps, elements, or combinations thereof.

Herein, the term "single particle type" indicates a particle consisting of 30 nodules or less, and a single particle type particle encompasses a single particle consisting of a single nodule as well as a quasi-single particle which is a composite of 2 to 30 nodules.

The term "nodule" indicates a lower particle unit body constituting a single particle and a quasi-single particle, and may be a single crystal lacking crystalline grain boundaries or may be a polycrystal in which grain boundaries are not present when observed in a field of view of $5000\times$ to $20000\times$ using a scanning electron microscope.

Herein, the term "secondary particle" indicates a particle formed by aggregation of a plurality several tens to several hundreds of primary particles. More specifically, the secondary particle is an aggregate of at least 50 primary particles.

Herein, when the term "particle" is described, any one or all of a single particle, a quasi-single particle, a primary particle, a nodule, and a secondary particle may be encompassed.

Herein, an "average particle size of nodules ($D_{mean}$)" is calculated by taking an average value of the particle sizes of individual nodules in approximately 30 particles containing at least one nodule, as determined by scanning electron microscopy (SEM) of positive electrode active material particles.

Herein, the term "volume cumulative average particle size ($D_{50}$)" indicates a particle size with respect to 50% in the volume accumulated particle size distribution of positive electrode active material powder. The average particle size $D_{50}$ may be measured using a laser diffraction method. For example, the average particle size $D_{50}$ may be measured in a way that the positive electrode active material powder is dispersed in a dispersion medium, the dispersion medium is introduced into a commercial laser diffraction particle size measurement instrument to obtain a volume accumulated particle size distribution graph, and the particle size at 50% of the volume accumulation is calculated.

Herein, the term "crystallite size $L_c$ (nm) in a c-axis direction" may be determined by X-ray diffraction (XRD) analysis, and the calculation is based on Scherrer Equation below, using Cu wavelength ($\lambda$), peak position $\theta$ of (002) plane, and full width at half maximum (FWHM) obtained from the XRD analysis.

$$[\text{Mathematical Equation 1}]$$

$$L_c = (K\lambda) / (\beta_{2\theta}\cos\theta)$$

In Mathematical Equation 1 above, K is a Scherrer constant of 0.89, $\beta_{2\theta}$ is a full width at half maximum (FWHM) of peak at (002) plane, $\lambda$ is a wavelength of 0.154056 nm, and $\theta$ is an angle at maximum peak.

Herein, a "specific surface area ($m^2/g$)" is measured through a BET method, and specifically may be calculated from an amount of nitrogen gas adsorbed at a liquid nitrogen temperature (77 K) using BELSORP-mino II from BEL JAPAN, INC.

Hereinafter, the present invention will be described in more detail.

A positive electrode and a lithium secondary battery according to the present invention may include at least one of the following components, and may include any combination of technically feasible components among the following components.

### Positive electrode

A positive electrode according to the present invention has a positive electrode composite layer, including a single particle-type positive electrode active material and a conductive material including a plate-like carbon material, disposed on a current collector, and has a packing index PI of 0.1 to 3.6, indicated by Equation 1 below.

$$[\text{Equation 1}]$$

$$PI = (D_{50} \times L_c) / (S_c)$$

In Equation 1 above, $D_{50}$ is a unitless number of an average particle size ($\mu$m) at 50% cumulative volume in a particle size distribution graph obtained through a laser diffraction method for the single particle-type positive electrode active material, $L_c$ is a unitless number of a crystallite size (nm) in a c-axis direction, as determined by XRD analysis, and $S_c$ is a BET specific surface area of the plate-like carbon material, given as a unitless number without a specific surface area unit of $m^2/g$.

*Packing index*

According to an embodiment of the present invention, the positive electrode has a positive electrode composite layer, including a single particle-type positive electrode active material and a conductive material including a plate-like carbon material, disposed on a current collector, and has a packing index of 0.1 to 3.6, indicated by Equation 1 below. The packing index is attributed to properties of the single particle-type positive electrode active material and the plate-like carbon material included in the positive electrode, and particularly attributed to factors affecting the rolling density and porosity of the positive electrode from the properties of each material.

Specifically, to achieve a high energy density positive electrode, increasing a loading amount of active material is generally applied, and typically carbon nanotubes, which provides conductivity even at low loadings, have been used to reduce an amount of conductive material and increase an amount of active material. However, in this case, an electrode thickness is hardly controllable due to the length characteristics of carbon nanotubes, and increasing rolling pressure inevitably damages the active material, resulting in an insignificant improvement in energy density, even though a high-loading positive electrode is achievable.

However, the positive electrode according to an embodiment of the present invention employs a combination of a single particle-type positive electrode active material and a plate-like carbon material having a large specific surface area and a small crystalline size in a c-axis direction, and defines relationships between specific factors from the characteristics of each material to specify the defined packing index, and may thus be achieved as a positive electrode having improved energy density without damage to active material particles.

Specifically, the packing index (PI) is indicated by Equation 1 below and ranges from 0.1 to 3.6.

$$PI = (D_{50} \times L_c) / (S_c)$$

$D_{50}$ is a unitless number of an average particle size ($\mu$m) at 50% cumulative volume in a particle size distribution graph obtained through a laser diffraction method for the single particle-type positive electrode active material, $L_c$ is a unitless number of a crystallite size (nm) in a c-axis direction, as determined by XRD analysis, and $S_c$ is a BET specific surface area of the plate-like carbon material, given as a unitless number without a specific surface area unit of $m^2/g$.

For the volume cumulative average particle size $D_{50}$ of the single particle-type positive electrode active material, included as a factor in the packing index, particles may not be in the form of a secondary particle in which tens to hundreds of primary particles are aggregated, and the number of nodules, which are the basic units constituting the particles, is preferably less than 30, and the particle size range falls within an optimal range that is neither too large nor too small. The single-particle type may have greater particle strength, and may thus withstand high rolling pressure without being damaged, and when the average particle size is too large or too small, maximizing rolling density and minimizing porosity through interaction with a conductive material within an active material layer are hardly achieved along with a greater number of variables, and accordingly, the single-particle type needs to be included as a factor when considering the packing index.

Furthermore, the specific surface area of the plate-like carbon material may indicate the number of carbon materials per unit mass or a relative thickness of a carbon material, and the crystallite size in a c-axis direction of the plate-like carbon material may serve as a factor representing the thickness thereof. The specific surface area and the crystallite size in a c-axis direction of the plate-like carbon material may indicate the ability to cause sliding during rolling and the ability to disperse stress through the sliding.

The packing index according to an embodiment of the present invention is derived by considering the relationships of the above-described factors, and the specific surface area increases with a greater number of plate-like carbon materials per unit mass or with a greater number of relatively thin carbon materials, and thus a larger specific surface area of the plate-like carbon material serves better to fill the pores of an active material layer, and a smaller crystallite size in a c-axis direction of the plate-like carbon material may result in a better ability to slide along a surface of active material particles during rolling.

In addition, the above-described characteristics of the plate-like carbon material are not universally applicable to all active materials, but may be achieved in a specific average particle size range along with single particle-type particle characteristics. When it comes to having secondary particle characteristics instead of single particle characteristics, particle size distribution is relatively wide, resulting in non-uniform pores, and thus characteristics provided by the conductive material filling pores do not significantly vary, and particle strength is relatively low, thereby hardly achieving the ability of dispersing stress. In addition, average particle size ranges also need to be considered along with the physical properties of the plate-like carbon material to maximize the ability of filling pores and of dispersing stress.

Therefore, the packing index decreases with a smaller volume cumulative average particle size of the single particle-type positive electrode active material within a specific range, a greater specific surface area of the plate-like carbon material, and a smaller crystallite size in a c-axis direction of the plate-like carbon material, and when the packing index is lower than a specific level, an active material layer may have reduced porosity along with maximized rolling density. However, an excessively low packing index may indicate that the single particle-type positive electrode active material has an excessively small particle size compared to the characteristics of the plate-like carbon material, which may indicate that the function of dispersing stress through the sliding of the plate-like carbon material may not work, and accordingly, controlling the packing index to an infinitely small level may not be desirable.

The packing index determined by Equation 1 above may range from 0.1 to 3.6, may preferably be 0.2 or more, 0.25 or more, 0.3 or more, 0.35 or more, or 0.4 or more, and may be 3.3 or less, 3.0 or less, 2.8 or less, 2.4 or less, 2.2 or less, 2.0 or less, 1.9 or less, or 1.8 or less. A packing index below 0.1 suggests that even when the specific surface area of the plate-like carbon material is sufficiently large and thus a number of carbon materials with relatively thin thickness may well fill pores, and a crystallite size in a c-axis direction is sufficiently small to have a form optimized for sliding during rolling and may thus well disperse stress, the volume cumulative average particle size of the single particle-type lithium nickel-based oxide may not be able to support the environment for achieving such a function, or, conversely, even when an environment with optimized volume cumulative average particle size is created, the characteristics of the plate-like carbon material may be insufficient.

Moreover, when the packing index is greater than 3.6, the plate-like carbon material may not have sufficient specific surface area to increase rolling density, and have a relatively greater thickness with larger crystallite size in a c-axis direction, and thus have increasing porosity instead of being disposed in pores through sliding during rolling, thereby failing to achieve conductivity, and even when the plate-like conductive material is well disposed in pores and disperses stress through sliding during rolling, the single particle-type positive electrode active material has a relative larger volume cumulative average particle size, failing to further reduce porosity, and when rolling pressure is increased to reduce porosity, particles may be damaged.

Hereinafter, each factor included in the packing index relationship will be described.

*Conducting material*

The positive electrode according to an embodiment of the present invention may include a conductive material, and the conductive material may include a plate-like carbon material. In addition, the plate-like carbon material may be, for example, graphite, artificial graphite, or natural graphite, or a mixture thereof.

According to an embodiment of the present invention, the plate-like carbon material included in the conductive material is a material that significantly affects the setting of the packing index relationship, and as described above, BET specific surface area and crystallite size in a c-axis direction may be major factors.

The plate-like carbon material may have a BET specific surface area of 100 $m^2/g$ to 400 $m^2/g$ measured through a BET method, and specifically may be calculated from an amount of nitrogen gas adsorbed at a liquid nitrogen temperature (77 K) using BELSORP-mino II from BEL JAPAN, INC. Preferably, the plate-like carbon material may have a BET specific surface area of 105 $m^2/g$ or more, 110 $m^2/g$ or more, 115 $m^2/g$ or more, 120 $m^2/g$ or more, 125 $m^2/g$ or more, 130 $m^2/g$ or more, or 135 $m^2/g$ or more, and further 350 $m^2/g$ or less, 330 $m^2/g$ or less, or 315 $m^2/g$ or less, 300 $m^2/g$ or less, 295 $m^2/g$ or less, or 290 $m^2/g$ or less.

The specific surface area is a factor that greatly affects the specifying of the packing index, and a greater specific surface area is preferable. Typically, a plate-like carbon material having a specific surface area of less than 100 $m^2/g$ is

applied. However, the packing index according to an embodiment of the present invention is achievable only when a plate-like carbon material having a large specific surface area is applied, and this may thus be a factor that may minimize pores in the positive electrode.

In addition, the plate-like carbon material may have a crystallite size of 20 nm to 60 nm in a c-axis direction, and this may be a value calculated through Scherrer Equation using several measured values derived from XRD analysis. The value calculated in this way may indicate a crystallite size in a thickness direction, and does not indicate an actual thickness, but may be a physical property value that may reflect the ability to induce sliding between spherical particles and disperse stress to some extent when particles are disposed under external force such as rolling. The crystallite size in a c-axis direction may preferably be 22 nm or more, 23 nm or more, 25 nm or more, 27 nm or more, 29 nm or more, or 30 nm or more, and may also be 58 nm or less, 56 nm or less, 54 nm or less, 52 nm or less, or 50 nm or less, and this range, when satisfied, is considered suitable to achieve the functions described above.

According to an embodiment of the present invention, the conductive material may further include at least one selected from a linear carbon material and a point-type carbon material, and the linear carbon material may be at least one selected from the group consisting of a single-walled carbon nanotube, a double-walled carbon nanotube, and a multi-walled carbon nanotube, and may preferably be a multi-walled carbon nanotube. In addition, the point-type carbon material may be at least one selected from the group consisting of carbon black, acetylene black, Ketjen black, channel black, furnace black, lamp black, and thermal black, and may preferably include carbon black.

*Positive electrode active material*

According to an embodiment of the present invention, the single particle-type positive electrode active material may have a single particle formation degree $D_{50}/D_{mean}$ of 1 to 10, where $D_{50}/D_{mean}$ is defined as a ratio of volume cumulative average particle size $D_{50}$ to average particle size $D_{mean}$ of nodules. The single particle-type positive electrode active material has greater particle strength than typical single particle-type positive electrode active materials in the form of a secondary particle in which tens to hundreds of primary particles are aggregated, thereby less particle breakage during rolling. In addition, since the single particle-type positive electrode active material according to the present invention has a small number of sub-parts (i.e., nodules) constituting particles, changes resulting from the volume expansion/contraction of primary particles during charging and discharging are small, and accordingly, the generation of cracks inside the particles is substantially reduced.

A lower single particle formation degree indicates that single particle-type positive electrode active material particles are more likely to exhibit single particle-type particle characteristics. Accordingly, the single particle formation degree may preferably range from 1 to 8, 1 to 7, 1 to 6, or 1 to 5, and when the above range is satisfied, particle breakage may be reduced and rolling density may be improved, and thus both lifespan characteristics and energy density may be expected to be improved.

According to an embodiment of the present invention, the single particle-type positive electrode active material may have a $D_{50}$ of 1.0 μm to 10.0 μm.

The single particle-type positive electrode active material may have an average particle size at 50% cumulative volume of 1.0 μm to 10.0 μm, preferably 1.5 μm or more, 1.7 μm or more, 2.0 μm or more, 2.5 μm or more, or 3.0 μm or more, and an average particle size at 50% cumulative volume of 9.0 μm or less, 8.0 μm or less, 7.5 μm or less, 7.0 μm or less, 6.5 μm or less, 6.0 μm or less, 5.5 μm or less, or 5.0 μm or less. When the volume cumulative average particle size $D_{50}$ of the single particle-type positive electrode active material satisfies the above range, rolling density may be increased without breakage of positive electrode active material particles.

According to an embodiment of the present invention, the nodule of the single particle-type positive electrode active material may have an average particle size ($D_{mean}$) of 0.2 μm to 3.0 μm, and the nodule may preferably have an average particle size of 0.5 μm or more, 0.7 μm or more, or 1.0 μm or more, and an average particle size of 2.8 μm or less, 2.5 μm or less, or 2.0 μm or less, and when the above range is satisfied, the single particle formation degree range may be satisfied, and thus an effect may be expected accordingly.

The positive electrode active material according to the present invention may include at least one selected from the group consisting of a lithium nickel-based oxide and a lithium metal phosphate-based compound. For example, the lithium nickel-based oxide may have a composition represented by Formula 1 below.

[Formula 1]  $Li_{1+x}Ni_aCo_bM^1_cM^2_dO_{2-e}X_e$

In Formula 1 above, $M^1$ includes at least one selected from Mn and Al, $M^2$ includes at least one selected from the group consisting of W, Zr, Y, Ba, Ca, Ti, V, Mg, Ta, and Nb, X includes at least one selected from the group consisting of N, P, S, F, and Cl, and x, a, b, c, d, and e satisfy $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$.

In Formula 1 above, $M^1$ may be Mn, Al or a combination thereof, preferably Mn or a combination of Mn and Al, and $M^2$ may be at least one selected from the group consisting of Zr, W, Y, Ba, Ca, Ti, Mg, Ta and Nb, preferably at least one selected from the group consisting of Zr, Y, Mg, and Ti, and more preferably Zr, Y, or a combination thereof. Although the $M^2$ element is not necessarily included, when an appropriate amount of the $M^2$ element is included, it may serve to promote grain growth during firing or enhance the stability of a crystal structure. In addition, X is an anion substituted for an oxygen site and may include N, P, S, F, or Cl.

1+x indicates a mole ratio of lithium in the single particle-type lithium nickel-based oxide, and x may satisfy $0 \leq x \leq 0.1$, $0 \leq x \leq 0.08$, $0 \leq x \leq 0.05$, $0 \leq x \leq 0.03$, or $0 \leq x \leq 0.02$.

a indicates a molar ratio of nickel among total metals excluding lithium in the single particle-type lithium nickel-based oxide, and may satisfy $0.50 \leq a < 1.00$, $0.60 \leq a \leq 0.99$, $0.70 \leq a \leq 0.99$ or $0.75 \leq a \leq 0.99$, $0.80 \leq a \leq 0.99$, $0.82 \leq a \leq 0.99$, $0.84 \leq a \leq 0.99$, or $0.86 \leq a \leq 0.99$.

b indicates a mole ratio of cobalt among total metals excluding lithium in the single particle-type lithium nickel-based oxide, and may satisfy $0 < b \leq 0.35$, $0.01 \leq b \leq 0.34$, $0.01 \leq b \leq 0.30$, $0.01 \leq b \leq 0.25$, $0.01 \leq b \leq 0.20$, or $0.01 \leq b \leq 0.15$.

c indicates a mole ratio of $M^1$ among total metals excluding lithium in the single particle-type lithium nickel-based oxide, and may satisfy $0 < c \leq 0.35$, $0.01 \leq c \leq 0.34$, $0.01 \leq c \leq 0.30$, $0.01 \leq c \leq 0.25$, $0.01 \leq c \leq 0.20$, or $0.01 \leq c \leq 0.15$.

d indicates a mole ratio of $M^2$ element among total metals excluding lithium in the single particle-type lithium nickel-based oxide and may satisfy $0 \leq d \leq 0.05$, $0 \leq d \leq 0.02$, or $0 \leq d \leq 0.01$.

e indicates a mole ratio of X element among total metals excluding lithium in the single particle-type lithium nickel-based oxide and may satisfy $0 \leq e \leq 0.05$, $0 \leq e \leq 0.02$, or $0 \leq e \leq 0.01$.

Meanwhile, the single particle-type lithium nickel-based oxide may further include a coating layer including at least one coating element selected from the group consisting of Al, Ti, W, B, F, P, Mg, Ni, Co, Fe, Cr, V, Cu, Ca, Zn, Zr, Nb, Mo, Sr, Sb, Bi, Si, and S, on a particle surface.

When a coating layer is provided on a surface of single particle-type lithium nickel-based oxide particles, contact between an electrolyte and the single particle-type lithium nickel-based oxide is suppressed by the coating layer, thereby reducing transition metal elution or gas generation resulting from side reactions with the electrolyte.

Preferably, the coating layer may include Co as a coating element. When a coating layer including Co is formed on a surface of single particle and/or quasi- single particle-type lithium nickel-based oxide particles, side reactions with an electrolyte may be suppressed and output may be improved.

In addition, the lithium metal phosphate-based compound may have a composition represented by Formula 2 below.

$$[\text{Formula 2}] \qquad Li_{1+x}[Fe_{1-y}M_y]PO_4$$

In Formula 2 above, M includes at least one selected from the group consisting of Mn, Co, Ni, Al, Mg, and Ti, and x and y satisfy $-0.5 \leq x \leq 0.5$ and $0 \leq y < 1$.

The lithium metal phosphate-based compound may be doped with M above. In this case, a lattice structure and distance within an olivine crystal structure, which is a crystal structure, are altered, leading to an increase in diffusion of lithium ions, and consequently improving the electrochemical characteristics of batteries including the positive electrode active material.

x may range from -0.5 to 0.5, may preferably be -0.3 or more, -0.1 or more, or 0 or more, and may be 0.5 or less, 0.4 or less, 0.3 or less, 0.2 or less, or 0.1 or less.

y may be 0 or more and less than 1, and may be 0.90 or less, 0.80, or less, 0.70 or less, 0.60 or less, 0.50 or less, 0.40 or less, 0.30 or less, 0.20 or less, 0.10 or less, or 0.05 or less.

The lithium metal phosphate-based compound may be, for example, $LiFePO_4$.

The lithium metal phosphate-based compound according to the present invention may be in the form of a single particle consisting of only one primary particle, or in the form of an irregular secondary particle consisting of 2 to 50 primary particles. In addition, the lithium metal phosphate-based compound may include an olivine structure, and specifically, may be formed of only an olivine structure. The coating layer according to the present invention may be formed not only on the secondary particle but also on the primary particle. That is, the coating layer according to the present invention may be uniformly present on a surface of the primary particle present inside the secondary particle.

The coating layer may include a carbon coating layer having a graphite structure, and the coating layer may have a thickness of 0.5 nm to 5 nm. When the thickness of the coating layer is within the above range, electrical conductivity is improved and also the entry and exit of lithium ions is not hindered. Specifically, the coating layer may have a thickness of 0.5 nm or more, 1.0 nm or more, 1.5 nm or more, 2.0 nm or more, 2.5 nm or more, or 3.0 nm or more, and a thickness of 5.0 nm or less.

The coating layer may be uniformly applied onto a surface of the lithium metal phosphate-based compound. That is, the coating layer may be in the form of a thin film. The coating layer may improve ion conductivity and electronic conductivity during charging and discharging of a battery including a positive electrode active material. The coating layer may contain impurities such as nitrogen, oxygen, and hydrogen in trace amounts in addition to carbon.

The coating layer may be included in an amount of 0.5 wt% to 3 wt% with respect to a total weight of the lithium metal phosphate-based compound so as to improve electrical conductivity and not to hinder the entry and exit of lithium ions.

*Composition of positive electrode*

According to an embodiment of the present invention, the positive electrode may have a porosity of 12% to 22%. Porosity is a measure of electrode density, and rather than simply achieving the numerical value of porosity described above, ensuring that an electrode exhibits no damage to active material particles, good dispersion of a conductive material, and excellent conductivity with low resistance may need to be focused. The positive electrode according to an embodiment of the present invention, satisfying the packing index, may be provided with the above-described range of porosity without damaging a positive electrode active material and with excellent conductivity, and may thus significantly contribute to achieving a high energy density secondary battery.

The positive electrode according to the present invention may include a positive electrode active material including a single particle-type lithium nickel-based oxide and a conductive material including a plate-like carbon material, and may further include a binder, and the positive electrode active material, the plate-like carbon material, and the binder may form a positive electrode composite layer, and the positive electrode composite layer may be formed on a positive electrode current collector.

In this case, the positive electrode active material may be included in an amount of 90 wt% to 99 wt%, more specifically 93 wt% or more, 95 wt% or more, 96 wt% or more, or 97 wt% or more, and 98.5 wt% or less, or 98 wt% or less, with respect to a total weight of the positive electrode composite layer, and may exhibit excellent capacity characteristics when included in the above range.

In addition, the conductive material including a plate-like carbon material may be included in an amount of 0.1 wt% to 4.0 wt%, preferably 0.2 wt% or more, 0.3 wt% or more, 0.4 wt% or more, or 0.5 wt% or more, and further, 3.8 wt% or less, 3.5 wt% or less, 3.2 wt% or less, 3.0 wt% or less, 2.8 wt% or less, or 2.5 wt% or less, with respect to a total weight of the positive electrode composite layer.

According to an embodiment of the present invention, the positive electrode may further include a binder. The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer obtained by substituting hydrogen of the above materials with Li, Na, or Ca, or various copolymers, and any one thereof or a mixture of two or more thereof may be used. The binder may be included in an amount of 0.1 wt% to 10 wt%, preferably 0.3 wt% or more, 0.5 wt% or more, 0.7 wt% or more, or 1.0 wt% or more, and further 9.0 wt% or less, 8.5 wt% or less, 8.0 wt% or less, 7.5 wt% or less, 7.0 wt% or less, or 6.5 wt% or less, with respect to a total weight of the positive electrode composite layer.

The positive electrode current collector may include a highly conductive metal and is not particularly limited as long as the positive electrode composite layer easily adheres thereto and the positive electrode current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used. In addition, the positive electrode current collector may typically have a thickness of 3 $\mu$m to 500 $\mu$m, and preferably may have a thickness of 300 $\mu$m or less, 200 $\mu$m or less, 100 $\mu$m or less, or 80 $\mu$m or less. The current collector may have fine irregularities formed on a surface thereof to improve the adhesion of a positive electrode active material. For example, the positive electrode current collector may be used in various forms such as a film, a sheet, a foil, a net, a porous body, a foam body, and a non-woven fabric body.

The positive electrode may be prepared according to a typical method of preparing a positive electrode except that the positive electrode active material powder described above is used. Specifically, a positive electrode slurry composition prepared by dissolving or dispersing the positive electrode active material powder, and if necessary, optionally dissolving or dispersing a binder, a conductive material, and a dispersant in a solvent, is applied onto the positive electrode current collector, and then dried and rolled to prepare the positive electrode.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent may dissolve or disperse the positive electrode active material, the conductive material, the binder, and the dispersant in consideration of the applying thickness of the slurry and preparation yield, and thereafter, have a viscosity which may exhibit excellent thickness uniformity upon application for the preparation of the positive electrode.

In addition, in another method, the positive electrode may be prepared by casting the positive electrode slurry composition on a separate support and then laminating a film separated from the support on the positive electrode current collector.

**Lithium secondary battery**

Next, a lithium secondary battery according to the present invention will be described. A lithium secondary battery according to the present invention includes the positive electrode of the present invention described above.

Specifically, the lithium secondary battery includes a positive electrode, a negative electrode positioned to face the positive electrode, a separator interposed between the positive electrode and the negative electrode, and an electrolyte. The positive electrode is the same as that described above, and thus, a detailed description thereof will be omitted. Hereinafter, only the rest of the components will be described in detail.

In addition, the lithium secondary battery may selectively further include a battery case for accommodating an electrode assembly composed of the positive electrode, the negative electrode, and the separator, and a sealing member for sealing the battery case.

In the lithium secondary battery, the negative electrode may include a negative electrode current collector and a negative electrode composite layer placed on the negative electrode current collector, and the negative electrode composite layer may include a negative electrode active material, a binder, and a conductive material.

The negative electrode current collector is not particularly limited as long as it has a high conductivity without causing chemical changes in batteries. For example, copper, stainless steel, aluminum, nickel, titanium, heat treated carbon, copper or stainless steel that is surfacetreated with one of carbon, nickel, titanium, silver, and the like, an aluminum-cadmium alloy, and the like may be used.

The negative electrode current collector may typically have a thickness of 3 $\mu$m to 500 $\mu$m, and preferably may have a thickness of 300 $\mu$m or less, 200 $\mu$m or less, 100 $\mu$m or less, or 80 $\mu$m or less. The current collector may have fine irregularities formed on a surface thereof to improve bonding strength with a negative electrode active material. For example, the current collector may be used in various forms such as a film, a sheet, a foil, a net, a porous body, a foam body, and a non-woven fabric body.

A compound capable of reversibly intercalating and deintercalating lithium may be used as the negative electrode active material, and examples thereof may be a carbonaceous material such as artificial graphite, natural graphite, Kish graphite, pyrolytic carbon, meso-carbon microbeads, mesophase pitches, petroleum or coal tar pitch derived cokes, mesophase pitch based carbon fiber, graphitized carbon fiber, amorphous carbon, soft carbon, or hard carbon; a (semi) metallic compound alloyable with lithium such as Si, Al, Sn, Pb, Zn, Bi, In, Mg, Ga, Cd, Si alloy, Sn alloy, or Al alloy; a (semi) metallic oxide material which may be doped and dedoped with lithium such as $SiO_b$ ($0<b\leq2$), SnO2, vanadium oxide, and lithium vanadium oxide; a heterogeneous composite material such as SiC composite or Sn-C composite; or a metal lithium thin film, and any one thereof or a mixture of two or more thereof may be used.

Preferably, the negative electrode active material may include at least one selected from the group consisting of a silicon-based active material, a carbon-based active material, and a silicon-carbon composite active material, and more preferably, the carbon-based active material may include at least one selected from the group consisting of artificial graphite, natural graphite, soft carbon, and hard carbon, the silicon-based active material may include pure Si particles and/or $SiO_b$ ($0<b\leq2$), and the silicon-carbon composite active material may include a Si-C composite. In addition, the negative electrode active material may be a mixed active material in which two or more of the above-described materials are mixed.

The negative electrode active material may be included in an amount of 60 wt% to 99 wt%, preferably 70 wt% or more, 80 wt% or more, 85 wt% or more, 90 wt% or more, and further 98 wt% or less, 97 wt% or less, or 95 wt% or less, with respect to a total weight of the negative electrode composite layer.

The binder is a component for assisting in bonding between a conductive material, an active material, and a current collector, and may typically be added in an amount of an amount of 0.1 wt% to 10 wt% with respect to a total weight of the negative electrode composite layer, and may be included in an amount of 0.2 wt% or more, 0.3 wt% or more, or 0.5 wt% or more, and further 8 wt% or less, or 5 wt% or less. Examples of the binder may include at least one selected from the group consisting of styrene-butadiene copolymer, acrylated styrene-butadiene copolymer, acrylonitrile-butadiene copolymer, acrylonitrile-butadiene-styrene copolymer, acrylic rubber, butyl rubber, polytetrafluoroethylene, polyethylene, polypropylene, ethylene propylene copolymer, polyethylene oxide, polyvinyl pyrrolidone, polyepichlorohydrin, polyphosphazene, polyacrylonitrile, polystyrene, ethylene propylene diene copolymer, polyvinyl pyridine, chlorosulfonated polyethylene, latex, polyester resin, acrylic resin, phenol resin, epoxy resin, and polyvinyl alcohol. Particularly, examples of the binder may include at least one selected from the group consisting of styrene-butadiene copolymer, acrylated styrene-butadiene copolymer, acrylonitrile-butadiene copolymer, acrylonitrile-butadiene-styrene copolymer, carboxymethyl cellulose, hydroxypropylmethyl cellulose, hydroxypropyl cellulose, diacetyl cellulose, cellulose acetate butylate, cellulose acetate propionate, cyanoethyl pullulan, cyanoethyl polyvinyl alcohol, cyanoethyl cellulose, and cyanoethyl sucrose Preferably, carboxymethyl cellulose, hydroxypropylmethyl cellulose, hydroxypropyl cellulose, or a mixture thereof is desirable.

The conductive material is a component for further improving conductivity of the negative electrode active material, and may be included in an amount of 10 wt% or less, preferably 5 wt% or less, 3 wt% or less, 2 wt% or less, or 1 wt% or less, and further 0.01 wt% or more, 0.05 wt% or more, 0.08 wt% or more, 0.1 wt% or more, or 0.3 wt% or more, with respect to a total weight of the negative electrode composite layer. Such conductive material is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon-based fibers and metal-based fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives, or the like may be used.

The negative electrode composite layer may be prepared by applying a negative electrode slurry composition, which is prepared by dissolving or dispersing a negative electrode active material and optionally a binder and a conductive material in a solvent, on a negative electrode current collector and drying the resulting product, or may be prepared by casting the negative electrode slurry composition on a separate support and then laminating a film separated from the support on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

In addition, the electrolyte used in the present invention may be an organic liquid electrolyte, an inorganic liquid electrolyte, a solid polymer electrolyte, a gel-type polymer electrolyte, a solid inorganic electrolyte, a molten type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it may provide lithium ions used in a lithium secondary battery. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O_4)_2$ may be used. The lithium salt may be preferably used in a concentration range of 0.1 M to 2.0 M. When the concentration of the lithium salt is included within the above range, the electrolyte has suitable conductivity and viscosity and may thus exhibit excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 wt% to 5 wt% with respect to a total weight of the electrolyte.

**Examples**

Hereinafter, examples of the present invention will be described in detail in such a manner that it may easily be performed by a person skilled in the art to which the present invention pertains. The present invention may, however, be embodied in many different forms, and is not limited to examples set forth herein.

**Examples 1 to 6 and Comparative Examples 1 to 6**

A single particle-type lithium nickel-based oxide having particle size characteristic as described in Table 1, which had a composition of $LiNi_{0.6}Co_{0.1}Mn_{0.3}O_2$, was used as a positive electrode active material and graphite, a plate-like carbon material, having the characteristics described in Table 1 below was used to prepare positive electrodes of Examples 1 to 6 and Comparative Examples 1 to 6.

The single particle-type lithium nickel-based oxide, a plate-like carbon material, and a PVDF binder were mixed in an N-methylpyrrolidone solvent at a weight ratio of 97.0:1.2:1.8 to prepare a positive electrode slurry (5,000 mPa.s), and the slurry was applied onto one surface of an aluminum current collector, dried at 130 °C, and rolled at a nip pressure of 3,000 kgf/cm to prepare positive electrodes.

[Table 1]

|  | Positive electrod e active material $D_{50}$ | Plate-like carbon material $L_c$ | Plate-like carbon material BET | Packing index |
|---|---|---|---|---|
| Example 1 | 3.91 | 30 | 290 | 0.40 |
| Example 2 | 3.91 | 50 | 110 | 1. 78 |
| Example 3 | 3.91 | 35 | 235 | 0.58 |
| Example 4 | 3.91 | 25 | 135 | 0.72 |
| Example 5 | 3.91 | 34 | 208 | 0.63 |
| Example 6 | 3.91 | 25 | 220 | 0.44 |
| Comparative Example 1 | 3.91 | 60 | 26 | 9.02 |
| Comparative Example 2 | 3.91 | 75 | 20 | 14.7 |
| Comparative Example 3 | 3.91 | 100 | 17 | 23.0 |
| Comparative Example 4 | 3.91 | 70 | 35 | 7.82 |
| Comparative Example 5 | 3.91 | 5 | 310 | 0.06 |
| Comparative Example 6 | 3.91 | 100 | 55 | 7.11 |

**Examples 7 to 10 and Comparative Examples 7 and 8**

A single particle-type lithium iron phosphate having particle size characteristic as described in Table 2, which had a composition of $LiFePO_4$, was used as a positive electrode active material and graphite, a plate-like carbon material, having the characteristics described in Table 2 below was used to prepare positive electrodes of Examples 7 to 10 and Comparative Examples 7 to 8.

The lithium iron phosphate, a plate-like carbon material, and a PVDF binder were mixed in an N-methylpyrrolidone solvent at a weight ratio of 97.0:1.2:1.8 to prepare a positive electrode slurry (15,000 mPa.s), and the slurry was applied onto one surface of an aluminum current collector, dried at 130 °C, and rolled at a nip pressure of 2,000 kgf/cm to prepare positive electrodes.

[Table 2]

|  | Positive electrod e active material $D_{50}$ | Plate-like carbon material $L_c$ | Plate-like carbon material BET | Packing index |
|---|---|---|---|---|
| Example 7 | 1.1 | 30 | 290 | 0.11 |

(continued)

|  | Positive electrod e active material $D_{50}$ | Plate-like carbon material $L_c$ | Plate-like carbon material BET | Packing index |
|---|---|---|---|---|
| Example 8 | 1.1 | 50 | 110 | 0.50 |
| Example 9 | 1.1 | 35 | 235 | 0.16 |
| Example 10 | 1.1 | 25 | 135 | 0.20 |
| Comparative Example 7 | 1.1 | 100 | 17 | 6.47 |
| Comparative Example 8 | 1.1 | 5 | 310 | 0.02 |

1) $D_{50}$ ($\mu$m) was measured in a way that the positive electrode active material powder was dispersed in a dispersion medium, the dispersion medium was introduced into a laser diffraction particle size measurement instrument (Mastersizer 3000, Malvern) to obtain a volume accumulated particle size distribution graph, and the particle size at 50% of the volume accumulation was calculated.

2) Specific surface area ($m^2/g$) was measured through a BET method, and was calculated from an amount of nitrogen gas adsorbed at a liquid nitrogen temperature (77 K) using BELSORP-mino II from BEL JAPAN, INC.

3) $L_c$ (nm) was calculated through Scherrer Equation below using Cu wavelength values (A) obtained by an X-ray diffraction (XRD) analyzer (Bruker AXS D8 Endeavor) and $2\theta$ and full width at half maximum of a peak for 002 plane, and the conditions are as follows.

Source: Cu radiation ($K\alpha1 : K\alpha2 = 8 : 2$)
$2\theta$: 15°~ 50°
Step size: 0.01°/ 3 sec
total scan time: 34 min
Voltage: 40 kV
Current: 40 mA

$$[\text{Mathematical Equation 1}]$$

$$L_c = (K\lambda) \ / \ (\beta_{2\theta}\cos\theta)$$

In Mathematical Equation 1 above, K is a Scherrer constant of 0.89, $\beta_{2\theta}$ is a full width at half maximum (FWHM) of peak at (002) plane, $\lambda$ is a wavelength of 0.154056 nm, and $\theta$ is an angle at maximum peak.

## Experimental Example 1: Evaluation of electrode characteristics (porosity and rolling density)

Rolling density (g/cc) was measured for a mixed powder of the positive electrode active material and carbon black from Examples and Comparative Examples using a density measuring device (Caver Pellet Press).

Porosity was calculated through Mathematical Equation 2 below.

Porosity of positive electrode composite layer after rolling (%) = {1-(electrode density of positive electrode composite layer after rolling / true density of positive electrode composite layer)} X 100     [Mathematical Equation 2]

In Equation 2 above, the true density of the positive electrode composite layer is density of a positive electrode composite layer measured when the positive electrode composite layer is taken to a predetermined size and pressed with press equipment until changes in thickness of the positive electrode composite layer stop, and the electrode density of the positive electrode composite layer after rolling is density of a positive electrode composite layer calculated by dividing electrode weight (g) per unit area ($cm^2$) by electrode thickness (cm), measured when the positive electrode composite layer is taken to a predetermined size after rolling.

[Table 3]

|  | Porosity (%) | Rolling density (g/cc) |
|---|---|---|
| Example 1 | 20.2 | 3.57 |

(continued)

|  | Porosity (%) | Rolling density (g/cc) |
|---|---|---|
| Example 2 | 21.3 | 3.52 |
| Example 3 | 20.8 | 3.55 |
| Example 4 | 20.3 | 3.57 |
| Example 5 | 21.0 | 3.54 |
| Example 6 | 19.1 | 3.62 |
| Comparative Example 1 | 23.4 | 3.43 |
| Comparative Example 2 | 23.9 | 3.41 |
| Comparative Example 3 | 25.3 | 3.34 |
| Comparative Example 4 | 24.9 | 3.37 |
| Comparative Example 5 | 25.3 | 3.34 |
| Comparative Example 6 | 24.9 | 3.37 |

[Table 4]

|  | Porosity (%) | Rolling density (g/cc) |
|---|---|---|
| Example 7 | 19.3 | 2.55 |
| Example 8 | 18.8 | 2.51 |
| Example 9 | 19.2 | 2.54 |
| Example 10 | 19.1 | 2.53 |
| Comparative Example 7 | 24.2 | 2.35 |
| Comparative Example 8 | 24.1 | 2.34 |

Referring to Table 3, it is determined that Examples 1 to 6 satisfying the packing index, unlike Comparative Examples 1 to 6, exhibit a significant decrease in electrode porosity and an increase in rolling density, thus enabling the achievement of a high energy density electrode.

In contrast, Comparative Examples 1 to 4 and 6, exhibiting high porosity and low rolling density, suggest that the use of plate-like graphite having a low specific surface area and a large $L_c$ value hindered the achievement of sliding characteristics of the plate-like carbon material, failing to appropriately dispose the plate-like carbon material within pores between active materials, and Comparative Example 5 employing a material having a large specific surface area and a low $L_c$ value which were not set as suitable, failed to satisfy the packing index, resulting in degraded porosity and rolling density.

In addition, referring to Table 4 above, it is determined that the results of Examples 7 to 10 and Comparative Examples 7 and 8 show similar trends to those observed in Examples and Comparative Examples in Table 3.

**Experimental Example 2: Evaluation of battery performance**

A porous polyethylene separator was placed between the positive electrode and the negative electrode from Examples and Comparative Examples to prepare an electrode assembly, and the electrode assembly was placed inside a battery case. Thereafter, an electrolyte solution was injected to prepared a lithium secondary battery.

In this case, the electrolyte solution was prepared by dissolving 1 M $LiPF_6$ in an organic solvent with a volume ratio of ethylene carbonate/ethyl methyl carbonate/diethyl carbonate of 3:4:4, and the negative electrode was prepared as follows.

Artificial graphite was used as a negative electrode active material. A negative electrode was prepared including a negative electrode composite layer containing the negative electrode active material, CMC and SBR as negative electrode binders, and carbon black as a negative electrode conductive material at a weight ratio of 95.6:1.1:2.3:1.0. The negative electrode composite layer had a weight loading of 265.8 mg/25 cm$^2$ and a thickness of 78.5 $\mu$m, and copper foil having a thickness of 10 $\mu$m was used as the negative electrode current collector.

The lithium secondary battery was charged up to 4.2 V at a C-rate of 0.1 C and then discharged up to 2.5 V to perform an activation process.

Each lithium secondary battery prepared above was charged up to 4.25 V in CCCV mode at 0.2 C (end current: 1/20 C). Thereafter, the lithium secondary battery was charged up to 4.25 V at a constant current of 0.33 C at 45 °C, and discharged up to 2.5 V at a constant current of 0.33 C, which was set as one cycle, and charge/discharge capacity was measured during 100 charge-discharge cycles, and capacity retention was calculated as follows.

Capacity retention (%) = (discharge capacity after 100 cycles / discharge capacity after 1 cycle) $\times$ 100

In addition, average voltage and capacity were obtained from charge/discharge curve during the above cycles, and the calculation was performed as follows using the volume of the lithium secondary battery applied to the test.

Energy density (Wh/L) = (average voltage (V) x initial discharge capacity (Ah)) / volume of lithium secondary battery (L)

[Table 5]

|  | Capacity retention (%) | Energy density (Wh/L) |
|---|---|---|
| Example 1 | 95.0 | 669 |
| Example 2 | 94.8 | 664 |
| Example 3 | 95.2 | 666 |
| Example 4 | 95.1 | 669 |
| Example 5 | 94.7 | 665 |
| Example 6 | 94.3 | 674 |
| Comparative Example 1 | 92.9 | 654 |
| Comparative Example 2 | 93.4 | 652 |
| Comparative Example 3 | 92.1 | 645 |
| Comparative Example 4 | 93.1 | 647 |
| Comparative Example 5 | 91.5 | 642 |
| Comparative Example 6 | 92.0 | 643 |

[Table 6]

|  | Capacity retention (%) | Energy density (Wh/L) |
|---|---|---|
| Example 7 | 92.0 | 418 |
| Example 8 | 91.5 | 415 |
| Example 9 | 91.6 | 416 |
| Example 10 | 91.2 | 418 |
| Comparative Example 7 | 86.6 | 395 |
| Comparative Example 8 | 86.9 | 399 |

Referring to Table 5 above, it is determined that Examples 1 to 6 satisfying the packing index exhibit low porosity and excellent rolling density, and accordingly, energy density is evaluated as excellent. Furthermore, it is also determined that Examples 1 to 6 exhibit high energy density and excellent lifespan characteristics.
In contrast, in Comparative Examples 1 to 6, lifespan characteristics are not significantly inferior to those of Examples, but high porosity results in low energy density, indicating that the overall performance is inferior to that of Examples.
In addition, in Table 6 above, it is determined that, similar to Examples and Comparative Examples of Table 5, lifespan characteristics and energy density of Examples are superior to those of Comparative Examples, and it is considered that the results are attributed to whether or not the packing index falls within the specified range.

**Claims**

1. A positive electrode having a positive electrode composite layer, comprising a single particle-type positive electrode active material and a conductive material comprising a plate-like carbon material, disposed on a current collector, and having a packing index PI of 0.1 to 3.6, indicated by Equation 1 below:

$$[Equation\ 1]$$

$$PI = [(D_{50} \times L_c) / (S_c)]$$

wherein in Equation 1 above,

$D_{50}$ is a unitless number of an average particle size ($\mu$m) at 50% cumulative volume in a particle size distribution graph obtained through a laser diffraction method for the single particle-type positive electrode active material, $L_c$ is a unitless number of a crystallite size (nm) in a c-axis direction, as determined by XRD analysis, and $S_c$ is a BET specific surface area of the plate-like carbon material, given as a unitless number without a specific surface area unit of $m^2/g$.

2. The positive electrode of claim 1, wherein the plate-like carbon material has a BET specific surface area $S_c$ of 100 $m^2/g$ to 400 $m^2/g$.

3. The positive electrode of claim 1, wherein the plate-like carbon material has a crystallite size $L_c$ of 20 nm to 60 nm in a c-axis direction.

4. The positive electrode of claim 1, wherein the plate-like carbon material comprises at least one selected from natural graphite and artificial graphite.

5. The positive electrode of claim 1, wherein the conductive material further comprises at least one selected from a linear carbon material and a point-type carbon material.

6. The positive electrode of claim 1, wherein the conductive material is provided in an amount of 0.4 wt% to 2.5 wt% with respect to a total weight of the positive electrode composite layer.

7. The positive electrode of claim 1, wherein the single particle-type positive electrode active material has a volume cumulative average particle size $D_{50}$ of 1.0 $\mu$m to 10.0 um.

8. The positive electrode of claim 1, wherein the single particle-type positive electrode active material comprises 30 or fewer nodules,
the nodules having an average particle size $D_{mean}$ of 0.2 $\mu$m to 3.0 $\mu$m.

9. The positive electrode of claim 1, wherein the single particle-type positive electrode active material has a $D_{50}/D_{mean}$ ratio ranging from 1 to 10, where $D_{50}$ is a volume cumulative average particle size and $D_{mean}$ is an average particle size of nodules.

10. The positive electrode of claim 1, wherein the single particle-type positive electrode active material comprises at least one selected from the group consisting of a lithium nickel-based oxide and a lithium metal phosphate-based compound,

the lithium nickel-based oxide having a composition represented by Formula 1 below, and
the lithium metal phosphate-based compound having a composition represented by Formula 2 below:

$$[Formula\ 1] \qquad Li_{1+x}Ni_aCo_bM^1_cM^2_dO_{2-e}X_e$$

wherein in Formula 1 above, $M^1$ comprises at least one selected from Mn and Al, $M^2$ comprises at least one selected from the group consisting of W, Zr, Y, Ba, Ca, Ti, V, Mg, Ta, and Nb, X comprises at least one selected from the group consisting of N, P, S, F, and Cl, and x, a, b, c, d, and e satisfy $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$, and

[Formula 2] $\qquad$ $Li_{1+x}[Fe_{1-y}M_y]PO_4$

wherein in Formula 2 above, M comprises at least one selected from the group consisting of Mn, Co, Ni, Al, Mg, and Ti, and x and y satisfy $-0.5 \leq x \leq 0.5$ and $0 \leq y < 1$.

11. The positive electrode of claim 1, having a porosity of 12.0% to 22.0%.

12. The positive electrode of claim 1, wherein the positive electrode active material is provided in an amount of 93.0 wt% to 99.0 wt% with respect to a total weight of the positive electrode composite layer.

13. The positive electrode of claim 1, wherein the positive electrode composite layer further comprises a binder.

14. A lithium secondary battery comprising the positive electrode of claim 1.

## INTERNATIONAL SEARCH REPORT

| International application No. |
| --- |
| **PCT/KR2024/014717** |

| A. | CLASSIFICATION OF SUBJECT MATTER |
| --- | --- |

**H01M 4/131**(2010.01)i; **H01M 4/62**(2006.01)i; **H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/131(2010.01); B01J 21/18(2006.01); C01B 31/04(2006.01); H01M 10/052(2010.01); H01M 10/0525(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 (cathode), 단입자 (single particle), 판상형 탄소재 (plate-type carbon structure), 충진 지수 (packing index, PI), 이차전지 (secondary battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2019-0139033 A (LG CHEM, LTD.) 17 December 2019 (2019-12-17)<br>See abstract; paragraphs [0005], [0047], [0049]-[0052], [0103], [0106], [0107] and [0205]; and claims 1, 2, 17 and 18. | 1-14 |
| Y | JP 2006-008472 A (HITACHI POWDERED METALS CO., LTD.) 12 January 2006 (2006-01-12)<br>See abstract; paragraphs [0013], [0014] and [0032]; and claim 1. | 1-14 |
| A | KR 10-2021-0149405 A (HYUNDAI MOTOR COMPANY et al.) 09 December 2021 (2021-12-09)<br>See abstract; and claims 1-6. | 1-14 |
| A | KR 10-2022-0091541 A (SVOLT ENERGY TECHNOLOGY CO., LTD.) 30 June 2022 (2022-06-30)<br>See abstract; and claims 1-19. | 1-14 |
| A | US 2015-0221943 A1 (SANYO ELECTRIC CO., LTD.) 06 August 2015 (2015-08-06)<br>See abstract; and claims 1-5. | 1-14 |

☐ Further documents are listed in the continuation of Box C.　　☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **09 January 2025** | **09 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/014717**

| Patent document cited in search report | | | Publication date (day/month/year) | Patent family member(s) | | | Publication date (day/month/year) |
|---|---|---|---|---|---|---|---|
| KR | 10-2019-0139033 | A | 17 December 2019 | CN | 111742431 | A | 02 October 2020 |
| | | | | CN | 111742431 | B | 10 October 2023 |
| | | | | EP | 3742533 | A1 | 25 November 2020 |
| | | | | JP | 2021-514524 | A | 10 June 2021 |
| | | | | JP | 7191342 | B2 | 19 December 2022 |
| | | | | KR | 10-2288292 | B1 | 10 August 2021 |
| | | | | US | 11973209 | B2 | 30 April 2024 |
| | | | | US | 2021-0005875 | A1 | 07 January 2021 |
| | | | | WO | 2019-235885 | A1 | 12 December 2019 |
| JP | 2006-008472 | A | 12 January 2006 | | None | | |
| KR | 10-2021-0149405 | A | 09 December 2021 | | None | | |
| KR | 10-2022-0091541 | A | 30 June 2022 | CN | 111916723 | B | 17 August 2021 |
| | | | | EP | 4024523 | A1 | 06 July 2022 |
| | | | | EP | 4024523 | A4 | 01 November 2023 |
| | | | | JP | 2022-553638 | A | 26 December 2022 |
| | | | | JP | 7368613 | B2 | 24 October 2023 |
| | | | | US | 2023-0024237 | A1 | 26 January 2023 |
| | | | | WO | 2022-011967 | A1 | 20 January 2022 |
| US | 2015-0221943 | A1 | 06 August 2015 | CN | 104584277 | A | 29 April 2015 |
| | | | | JP | 2017-155990 | A1 | 16 February 2017 |
| | | | | WO | 2014-155990 | A1 | 02 October 2014 |

Form PCT/ISA/210 (patent family annex) (July 2022)